# EUROPÄISCHE PATENTSCHRIFT

(11) **EP 2 895 311 B1**
(45) Veröffentlichungstag und Bekanntmachung des Hinweises auf die Patenterteilung: **30.11.2022**
(21) Anmeldenummer: 13782642.6
(22) Anmeldetag: 12.09.2013
(51) Int. Cl.: C08G 63/78, B29B 7/42, B29B 7/60, B29B 9/06, B29C 48/03, B29C 48/53, B29C 48/54, B29C 48/56, C08J 11/06, C08G 85/00, B29C 48/59, B29C 48/64, B29C 48/645, B29B 7/66, B29B 7/72

(54) **VERFAHREN UND VORRICHTUNG ZUM ERHÖHEN DER GRENZVISKOSITÄT EINER POLYKONDENSATSCHMELZE**
METHOD AND APPARATUS FOR INCREASING THE INTRINSIC VISCOSITY OF A POLYCONDENSATE MELT
PROCÉDÉ ET DISPOSITIF POUR ACCROÎTRE LA VISCOSITÉ LIMITE D'UN POLYCONDENSAT FONDU

(30) Priorität: 12.09.2012 AT 9972012
(43) Veröffentlichungstag der Anmeldung: 22.07.2015
(73) Patentinhaber: Next Generation Recyclingmaschinen GmbH, 4101 Feldkirchen an der Donau (AT)
(72) Erfinder: PICHLER, Thomas, A-4171 St. Peter am Wimberg (AT); HEHENBERGER, David, 4170 Haslach an der Mühl (AT); BEHOUN, Helmut, A-4300 St. Valentin (AT); PICHLER, Bernhard, A-4171 St. Peter am Wimberg (AT)
(74) Vertreter: Burger, Hannes
(86) Internationale Anmeldenummer: PCT/AT2013/000151
(87) Internationale Veröffentlichungsnummer: WO 2014/040099

(56) Entgegenhaltungen:
- EP-A2- 1 302 501
- WO-A1-00/78524
- WO-A1-2012/119165
- DE-A1- 2 243 024

## Beschreibung

Die Erfindung betrifft ein Verfahren zum Erhöhen der Grenzviskosität einer Polykondensatschmelze unter Unterdruck, bei dem die Schmelze durch eine Lochplatte oder ein Sieb mit mehreren Öffnungen mit einem Durchmesser kleiner 0,5 mm in eine Kammer eintritt, in der ein Druck kleiner 20 mbar herrscht, bei dem die Schmelze diese Kammer in dünnen Fäden im freien Fall passiert und bei dem die dünnen Fäden in einem Sammelbehälter unterhalb der Kammer zu einem Schmelzebad zusammengeführt werden und die Schmelze im Sammelbehälter verweilt.

Polykondensate (PET, PBT, PEN, PC etc.) sind Thermoplaste, welche durch Polykondensation hergestellt werden. Bei der Polykondensation verknüpfen sich Monomere durch Abspaltung von Reaktionsprodukten (z.B. Wasser) über eine Stufenreaktion zu Polykondensaten. Die Polykondensation ist demnach mit einem Kettenwachstum verbunden. Diese Molekülkettenlänge bestimmt maßgeblich die mechanischen Eigenschaften von Produkten auch Polykondensaten. Dieser Vorgang ist nicht nur bei der Herstellung von z.B. PET-Neuware von Bedeutung, sondern spielt ganz besonders beim Recycling von derartigen Produkten eine wesentliche Rolle.

Die EP 1 302 501 A2 beschreibt ein Verfahren zum Fördern der Nachpolykondensation von Polykondensationsprodukten sowie zum Entfernen vom in dem Rohprodukt vorhandenen flüchtigen Nebenprodukten. Durch einen Extrusionsvorgang wird das Rohprodukt auf eine Temperatur von 30°C bis 40°C oberhalb der Schmelzetemperatur gebracht. Diese so aufbereitete Schmelze wird anschließend durch eine Extrusionsplatte mit einer Vielzahl von Löchern hindurchgefördert, um der Schmelze eine Fadenform zu geben. Für die Verdampfung der flüchtigen Nebenprodukte wird ein Verhältnis der nutzbaren freien Oberfläche in Bezug zu dem Volumen des als Schmelze zu verarbeitenden Produktes mit zumindest 40 gewählt. Die eine Fadenform aufweisenden Schmelzestränge treten in eine Kammer mit einem reduzierten Druck ein, in welcher ein Druck von kleiner 0,1 bar herrscht. Unterhalb der Kammer ist ein Sammelbehälter angeordnet, in welchem aus den Schmelzefäden ein Schmelzebad gebildet wird. Aus diesem Schmelzebad wird eine Teilmenge entnommen und der Zuleitung des aufgeschmolzenen Rohproduktes zugeführt. Dieses Gemisch an Schmelze aus Rohprodukt sowie dem im Behälter bereits behandelten Schmelzeprodukt wird erneut durch die Extrusionsplatte mit der Vielzahl an Löchern der Kammer mit dem reduzierten Druck zugeführt.

Die WO 00/78524 A1 beschreibt eine Vorrichtung zur Entgasung von Schmelze, umfassend eine Schmelzedüse, die einen Eingangsanschluss zur Verbindung mit einer Schmelzezufuhr und eine Schmelzeaustrittsöffnung aufweist, die in einem durch im Wesentlichen gasundurchlässige Wände definierten Entgasungsraum mündet. Der Entgasungsraum kommuniziert mit einer Vakuumquelle und weist eine Austragöffnung zur im Wesentlichen dichten Verbindung mit einem nachfolgenden Schmelzeverarbeitungssystem auf. An die Austragsöffnung des Entgasungsraums ist eine als Zahnradpumpe ausgebildete Schmelzepumpe angeschlossen, welche die Schmelze weiterbefördert. Stromaufwärts vom Kämmungsabschnitt der Zahnräder der Schmelzepumpe ist ein Schmelzeverteiler angeordnet. Die in den Entgasungsraum eintretende Schmelze tritt dabei als kontinuierlicher Schlauch ein. Anstelle des Schmelzeschlauches kann die Schmelze aber auch in eine Vielzahl an "spaghettiförmigen" Teilströmen unterteilt sein. Der im Entgasungsraum herrschende Unterdruck kann dabei frei gewählt werden.

Aus der DE 22 43 024 A1 ist eine Vorrichtung zur kontinuierlichen Herstellung von hochmolekularem Polyethylenterephthalat (PET) bekannt geworden. Diese besteht aus einem senkrecht angeordneten, zylinderförmigen Behälter mit einem Schmelzeinlass an dessen oberen Ende. Am unteren Ende ist ein Produktauslass angeordnet. Des Weiteren münden in den zylinderförmigen Behälter Abzugsstutzen für flüchtige Stoffe. Weiters ist in der Mitte des Behälters eine Welle senkrecht angeordnet, um die senkrecht feststehende Stoffaustauschbleche angeordnet sind. Weiters ist jeweils über diesen Stoffaustauschblechen ein Verteilerraum und unter diesem ein Sammelraum vorhanden, wobei zwischen einem Verteilerraum und dem Sammelraum der darüber liegenden Stufe ein Verbindungsrohr angebracht ist, durch welches die Welle geführt ist. Die Welle ist an den durch das Verbindungsrohr ragenden Teilen jeweils als eine in den Verteilerraum fördernde Extruderwelle ausgebildet.

Die WO 2012/119165 A1 beschreibt sowohl ein Verfahren als auch eine Vorrichtung zum Entfernen von Verunreinigungen aus einer Kunststoffschmelze unter Unterdruck. Dazu tritt die Kunststoffschmelze durch wenigstens eine Öffnung in eine Kammer ein in der ein Unterdruck, vorzugsweise ein Druck kleiner 50 mbar herrscht. Der Eintritt der Kunststoffschmelze in die Kammer erfolgt durch eine Lochplatte oder ein Sieb mit mehreren Öffnungen, wobei der Durchmesser der Öffnungen kleiner 1,5 mm bis hin zu 0,05 mm betragen kann. Nach dem Durchtritt der Kunststoffschmelze durch die Kammer in vertikaler Richtung wird diese am unteren Ende in einem Sammeltrichter gesammelt und über eine Auslassöffnung einer Schmelzepumpe zur Weiterförderung zugeleitet.

Es ist bekannt, dass Polyester hygroskopisch sind und Feuchtigkeit binden. Bei der Verarbeitung von z.B. PET auf Extrusionsmaschinen kommt es beim Vorhandensein von Wasser zur sogenannten Hydrolyse, d.h. Polymerketten werden aufgespaltet, was zu einer Verringerung der Grenzviskosität führt. Um dieses Materialschädigung möglichst gering zu halten ist es üblich, PET vor der Verarbeitung auf Extrudern zu trocknen. Gänzlich verhindert werden kann sie jedoch nicht.

Ebenso ist bekannt, dass das Verweilen von Polyester unter hoher Temperatur und unter Vakuum oder Inertgas Polykondensation bewirkt und somit die Viskosität des Polyesters erhöht wird. Die bekannten Verfahren der Schmelzepolykondensation oder der Festphasenpolykondensation oder einer Kombination aus beiden werden üblicherweise zur Herstellung hochmolekularer Polyester aus niedrigmolekularem Ausgangsmaterial angewendet.

Bei der Festphasenpolykondensation muss das Ausgangsmaterial in fester Form als Granulat oder gesäubertes Mahlgut mit ausreichendem Schüttgewicht vorliegen. PET in anderen Formen wie zum Beispiel Fasern oder Folien muss, um der Festphasenkondensation unterzogen werden zu können, über einen materialschädigenden und energieaufwändigen Extrusionsprozess in Granulatform gebracht werden. Zur weiteren Verarbeitung muss das Ausgangsmaterial erwärmt werden, wobei es bei der Kristallisationstemperatur (80°C - 120°C) zu einem Verkleben der Granulatkörner kommt. Um dies zu verhindern wird das Material zunächst einen sog. Kristallisator zugeführt, in dem es unter ständigem Rühren über die sog. Kristallisationstemperatur erwärmt wird. Das nun rieselfähige Material kann dann dem Festphasenkondensationsbehälter zugeführt werden, wo es weiter auf ca. 190°C bis 250°C erwärmt wird und mehrere Stunden unter Vakuum oder Inertgas verweilt, bis die gewünschte Grenzviskosität erreicht wird. Diese Prozesse werden diskontinuierlich, semi-kontinuierlich und kontinuierlich ausgeführt.

Bei den bestehenden Verfahren der Schmelzepolykondensation verweilt Polyesterschmelze bei Temperaturen um ca. 265°C bis 300°C und unter starkem Vakuum von ca. 1 mbar für oftmals mehrere Stunden, um die gewünschte Grenzviskosität zu erreichen. Diese Verfahren finden hauptsächlich in der Herstellung von Neuware Anwendung und sind für das Recycling von Polyester nicht geeignet.

Ziel des Kunststoffrecyclings im Sinne von werkstofflicher Verwertung ist im weitesten Sinne die Erzeugung eines neuen Produktes aus vorliegenden Abfallstoffen. In Bezug auf Thermoplaste im Allgemeinen findet dabei zumeist eine Umformung zu Rezyclaten und in Folge eine weitere Umformung zum finalen Produkt statt. Jede Umformung ist in der Regel mit einem Aufheiz- und Abkühlvorgang verbunden. Jede Aufheizung bewirkt bei vielen Kunststoffen eine irreversible Schädigung des Polymers ebenso bedeuten diese Aufwärm- und Abkühlvorgänge hohen Energieeinsatz welcher zugleich zu einem minderwertigerem Polymer führt.

Der Erfindung liegt die Aufgabe zugrunde, einen energiesparenden Prozess im Zuge der Wiederaufbereitung von Polykondensaten wie Polyester bereit zu stellen, durch welchen die Qualität des Polykondensats verbessert werden kann und somit das Herstellen von hochwertigen Polymeren aus niedrigmolekularen Abfallstoffen erlaubt.

Gelöst wird diese Aufgabe bei einem Verfahren der eingangs genannten Art dadurch,
- dass die Schmelze im Sammelbehälter für wenigstens eine Minute verweilt und dabei die Schmelze im Sammelbehälter von einem in horizontaler Lage ausgerichteten, vorzugsweise schneckenförmigen Austragsextruder unter Vakuum ständig bewegt wird,
- dass eine Höhe des Schmelzebades im Sammelbehälter so groß gewählt wird, dass der Austragsextruder im Sammelbehälter nicht vollständig von der Schmelze bedeckt wird, und dabei die Schmelze durch eine Drehbewegung des Austragsextruders immer wieder aufgerissen und die Oberfläche erneuert wird,
- dass die bei den dünnen Fäden begonnene Polykondensation im Schmelzebad durch das Verweilen und in Bewegung halten fortgesetzt wird, und so ein Polymerkettenwachstum und damit eine weitere Erhöhung der Grenzviskosität bewirkt wird, und
- dass die Schmelze vom Austragsextruder aus dem Sammelbehälter ausgetragen wird.

Beim erfindungsgemäßen Verfahren zum Erhöhen der Grenzviskosität (intrinsische Viskosität (iV)) von Polykondensaten mittels Schmelze-Polykondensation wird also die Schmelze über eine Lochplatte oder ein Lochsieb in eine Reaktionskammer, welche unter Unterdruck steht oder mit einem Inertgas gefüllt ist, eingebracht und dort für eine bestimmte Zeit verweilen gelassen, bis die Schmelze eine gewünschte Grenzviskosität aufweist, und anschließend z.B. über eine Lochplatte oder ein formgebendes Kunststoffwerkzeug ausgetragen wird.

Eine Erhöhung des Molekulargewichtes wird durch Parameter wie Temperatur, Vakuumdruck, Verweilzeit sowie die Schmelzeoberfläche und deren ständiger Erneuerung beeinflusst. Um diese Reaktion so wirtschaftlich wie möglich zu gestalten ist eine optimale verfahrenstechnische Lösung mit dem richtigen Zusammenspiel der Einflussgrößen von Bedeutung.

Mit dem erfindungsgemäßen Verfahren können jedoch nicht nur Verunreinigungen wie Wasser, sondern auch andere Verunreinigungen, wie z.B. Lösungsmittel, Reinigungsmittel bzw. ganz allgemein Feuchtigkeit und ausdampfende Bestandteile und/oder Luft, die bei der Herstellung oder dem Recycling von Kunststoffmaterialien auftreten, von der Kunststoffschmelze abgetrennt werden.

Die Vorteile der Erfindung werden nachfolgend beispielhaft mit Bezug auf das Recycling von PET beschrieben, wobei dies aber nicht als Beschränkung der Erfindung auf Recycling und/oder auf PET bzw. auf die konkret beschriebene Konstruktion der Vorrichtung verstanden werden soll.

PET-Materialien werden beim Recycling zunächst wie aus dem Stand der Technik bekannt zerkleinert, ggf. gereinigt, aufgeschmolzen, entgast und gefiltert. Nach der Filtration wird die Schmelze über eine temperaturgeregelte Schmelzeleitung z.B. zu einer Lochplatte gefördert. Durch die Einstellung der optimalen Temperatur und durch den sich aufbauenden Druck wird die Schmelze durch die Lochplatte gedrückt. In der Lochplatte befindet sich abhängig vom Durchsatz eine unterschiedliche Anzahl an kleinen Löchern. Diese haben bei PET einen Durchmesser von z.B. 0,3 mm. Die Lochplatte könnte aber beispielsweise auch als Sieb, Gitter oder dergleichen ausgeführt werden. Besonders gute Ergebnisse werden bei einem Durchmesser der Öffnungen kleiner 0,5 mm, vorzugsweise zwischen 0,05 und 0,5 mm, besonders bevorzugt zwischen 0,1 und 0,3 mm, erzielt, je nach gewünschtem Durchsatz und Ergebnis. Bei nicht runden Löchern entspricht deren Fläche der Fläche von Löchern mit den vorstehend genannten Durchmessern.

Nach der Lochplatte gelangen die Fäden, welche sich durch die Schwerkraft noch weiter verdünnen, in eine unter Unterdruck, vorzugsweise Vakuum, stehende Kammer. Die Kammer kann auch mit getrocknetem Gas gefüllt sein oder mit getrocknetem Gas durchspült werden. Je nach gewünschter Grenzviskosität kann das Vakuum in der Kammer höher oder geringer gewählt werden. Bevorzugt wird mit einem Druck zwischen 0,5 und 20 mbar gearbeitet, da sich bei diesen Drücken einerseits gute Ergebnisse erzielen lassen, diese Drücke andererseits mit handelsüblichen Vakuumpumpen erzeugt werden können. In dieser Kammer findet die Reaktion statt. Das Wasser diffundiert durch das Vakuum vom Inneren der Schmelze an die Oberfläche. Durch das Vakuum und die Temperatur wird das Wasser in Wasserdampf umgewandelt bzw. können Lösungsmittel oder dergleichen verdampfen und/oder Luft aus der Schmelze entweichen und dann aus der Kammer abgeführt werden. Wird die Vorrichtung beispielsweise einem Extruder nachgeschaltet, können die verkürzten Molekularketten wieder verlängert werden. Die resultierende Kunststoffqualität kann durch geeignete Auslegung der Vorrichtung und des Verfahrens beeinflusst werden.

Beispielsweise kann die Vorrichtung für die Bearbeitung von PET so ausgelegt werden, dass eine Lochplatte mit 3000 Löchern mit je 0,3 mm Durchmesser und eine freie Fallhöhe von 2 Metern in der Kammer bei einem Unterdruck von 3 mbar verwendet wird. Dies ergibt durch die Einwirkung der Schwerkraft und des Vakuums einen Schmelzefadendurchmesser von ca. 0,2 mm, der zu einer sehr guten Reinigung bzw. Entgasung der Schmelze führt.

Es versteht sich, dass je nach gewünschtem Durchsatz mehr oder weniger als 3000 Löcher, vorzugsweise zwischen 1000 und 5000 Löchern, beispielsweise 2000 oder 4000 Löcher je Lochplatte oder Sieb verwendet werden können. Auch können größere oder kleiner Höhen als 2 Meter verwendet werden. Bevorzugt sind Höhen von 1,5 m bis 4 m, insbesondere Höhen von 2m, 2,5 m, 3 m oder 3,5 m.

Die Schmelze fällt in Form von dünnen Schmelzefäden durch die Kammer nach unten und Verunreinigungen wie Wasser diffundieren an die Oberfläche und verdampfen durch die Temperatur und den Unterdruck. Durch die ungehinderte vertikale Bewegung der dünnen Schmelzefäden in der Kammer nach unten erfolgt eine sehr starke Vergrößerung der aktiven Schmelzeoberfläche.

Durch die Entfernung von Wasser aus der PET-Schmelze verbinden sich die kurzen Molekülketten zu längeren Ketten, was ein Ansteigen des Molekulargewichtes und somit eine Erhöhung der Grenzviskosität bewirkt.

Am unteren Ende der Kammer sammelt sich die Schmelze in einem Sammelbehälter und wird z.B. durch einen Austragsextruder nach einer Verweildauer von vorzugsweise mindestens einer Minute, vorzugsweise von mindestens drei oder vier Minuten, zu einer Vorrichtung zum Granulieren, einem formgebenden Werkzeug oder in eine weitere gleich oder ähnlich aufgebaute Kammer weitergeleitet, wobei am Ende der ersten oder am Anfang der nächsten Kammer oder irgendwo auf dem Weg zwischen diesen beiden Kammern eine Heizeinrichtung angeordnet sein kann, mit welcher der Kunststoff auf seiner Schmelzetemperatur, also einer Temperatur, in welcher der Kunststoff plastisch fließt, gehalten werden kann.

Das erfindungsgemäße Verfahren kann auf einfache Weise individuell nach Kundenwünschen angepasst und ausgeführt werden, wobei auch vorhandene Anlagen zur Herstellung oder zum Recycling von Kunststoffen aufgerüstet oder ergänzt werden können.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen. Es zeigt:
- Fig. 1: eine Anlage für das Recycling von Kunststoff mit einer Vorrichtung im Aufriss,
- Fig. 2: die Anlage von Fig. 1 in Draufsicht,
- Fig. 3: einen Behälter im Schnitt,
- Fig. 4: einen Schnitt durch den Behälter von Fig. 3 entlang der Linie IV-IV,
- Fig. 5: ein Diagramm, das den Einfluss der Verweilzeit im Reaktor auf den iV-Wert zeigt, und die
- Fig. 6 bis 12: alternative Ausführungsformen schneckenförmiger Misch- und Austragsteile.

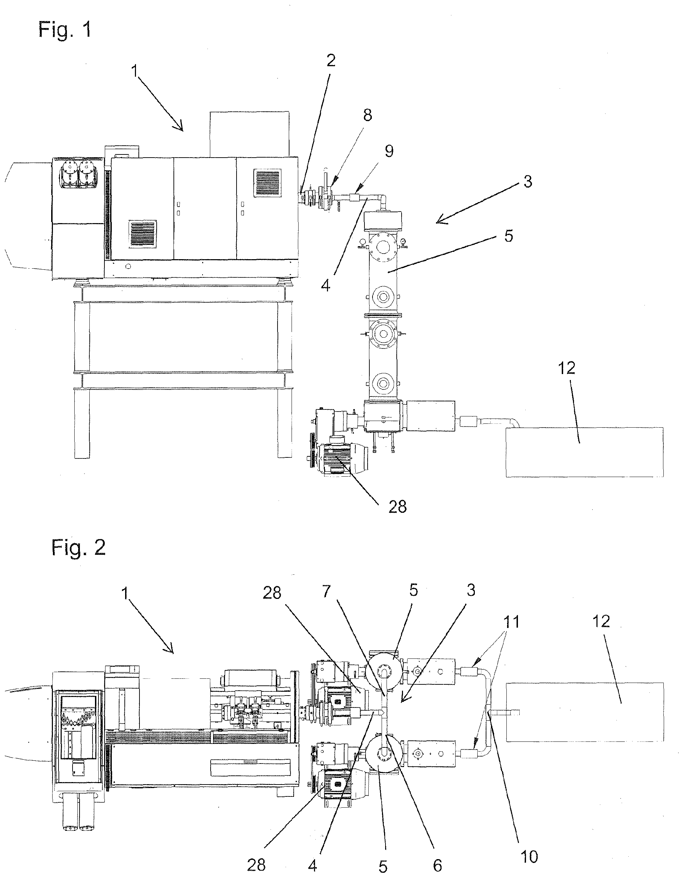

In Fig. 1 und 2 ist beispielhaft eine Recyclinganlage dargestellt, die in der mit 1 bezeichneten Baugruppe eine Vorrichtung zum Zerkleinern und Extrudieren von Polykondensaten, beispielsweise Fasern, Folien, Tiefziehfolien aus PET oder anderen Polykondensaten, aufweist. Diese Baugruppe kann wie aus dem Stand der Technik bekannt aufgebaut sein und ist nicht Gegenstand der vorliegenden Erfindung. Die Recyclinganlage wird beispielhaft für das Recycling von PET beschrieben ist aber nicht auf diesen Kunststoff beschränkt.

Beispielsweise kann PET Recyclingware oder auch PET Neuwarengranulat je nach Bedarf durch ein Beschickungssystem (Einwellenzerkleinerer, Schneidverdichter, Silo, Dosierung für Granulat etc.) einem Extruder zugeführt werden. Je nach Beschickungssystem wird das Ausgangsmaterial (Fasern, Anfahrtsklumpen, Flaschenmahlgut, Folien, Granulat, etc.) durch einen. Einwellenzerkleinerer oder Schneidverdichter zerkleinert, verdichtet und optional oberflächenentfeuchtet oder das Granulat durch das Dosiersystem dem Extruder zugeführt.

Es hat sich als sehr vorteilhaft erwiesen wenn der oben angeführte Extruder mit einer aus dem Stand der Technik bekannten Entgasungseinrichtung ausgestattet ist. Da das im nicht vorgetrockneten PET gebundene Wasser bei der Extrusion hydrolytischen Abbau verursacht ist es notwendig das PET zu entfeuchten sobald es den Schmelzezustand erreicht. Die während des Aufschmelzvorganges bereits stattgefundene Verringerung der Grenzviskosität durch Hydrolyse kann zwar nicht mehr kompensiert werden, jedoch kann durch das Entfernen noch vorhandenen Wassers aus der Schmelze ein weiterer iV-Abbau weitgehend verhindert werden. Noch vorteilhafter ist es wenn unmittelbar nach der Entgasungseinrichtung des Extruders eine weitere Entgasungseinrichtung angeordnet ist und wenn an den Entgasungszonen ein Unterdruck von 2 bis 5 mbar herrscht. Im Anschluss an die Extrusion folgt eine Filtriereinheit, welche die PET-Schmelze auf die notwendige Reinheit und Homogenität filtert.

Der zur Beschickung des nun folgenden Schmelzereaktors notwendige Schmelzedruck wird durch den Aufschmelzextruder oder durch eine Schmelzepumpe 9, welche nach der Filtriereinheit angeordnet sein kann, aufgebracht.

Die vorstehend beschriebenen Komponenten der Anlage sind für die Erfindung nicht unbedingt notwendig, wenngleich sie die Wirkung des erfindungsgemäßen Verfahrens positiv beeinflussen.

An den Ausgang 2 des Extruders bzw. die Filtriereinheit, einen Siebwechsler 8 mit einem Sieb und die Schmelzepumpe 9 ist eine Vorrichtung 3 zum Entfernen von Verunreinigungen aus der vom Extruder kommenden Schmelze über eine Zufuhr- bzw. Schmelzeleitung 4 angeschlossen. Die Schmelzeleitung 4, führt je nach Anlage, Anforderungen oder räumlichen Gegebenheiten entweder waagrecht direkt zu einem oder mehreren Behältern 5 oder zuerst senkrecht entlang eines Behälters 5 nach oben.

Die Vorrichtung 3 besteht im dargestellten Ausführungsbeispiel aus insgesamt zwei Behältern 5, die parallel nebeneinander angeordnet sind. Von der Zufuhrleitung 4 führt eine Verteilerleitung 6, 7 zu jeweils einem Behälter 5. Nach den beiden Behältern 5 führt eine Sammelleitung 10 zu einer Granuliervorrichtung 12. Die Granuliervorrichtung 12 kann wiederum wie aus dem Stand der Technik bekannt aufgebaut sein und ist nicht Gegenstand der vorliegenden Erfindung.

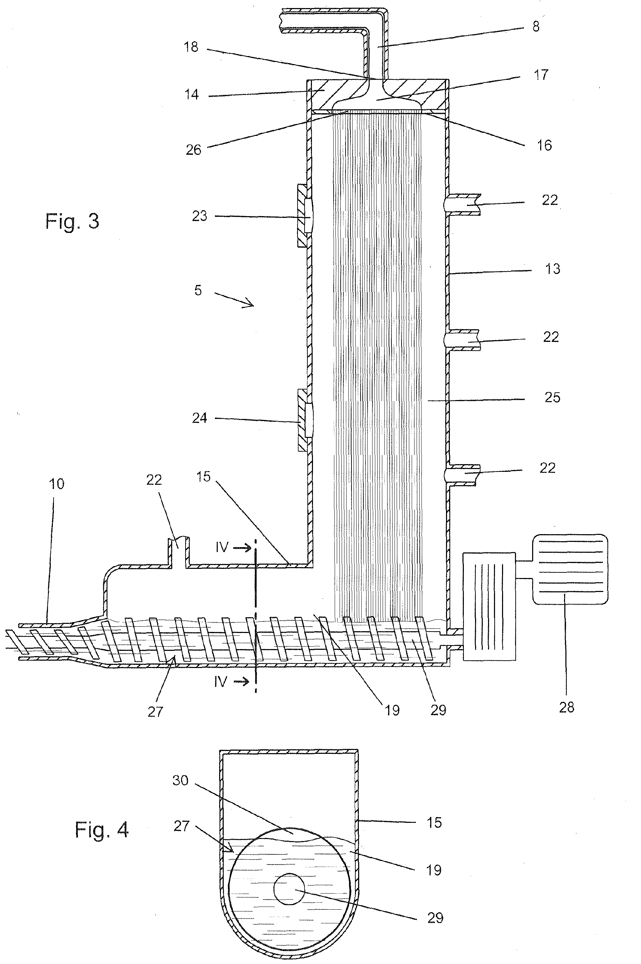

Die Behälter 5 sind beispielsweise wie in Fig. 3 dargestellt aufgebaut und bestehen aus einem vorzugsweise zylindrischen Rohr 13. Durch variieren der Länge des zylindrischen Rohres 13 können auf einfache Weise unterschiedliche Fallhöhen im Behälter 5 hergestellt werden. Am oberen Ende des Rohres 13 ist ein Kopfteil 14 angebracht und am unteren Ende des Rohres 13 ein Fußteil 15 mit einem eine Reaktionskammer bildenden Sammelbehälter 19.

Im Kopfteil 14 ist im Anschlussbereich zum Rohr 13 eine Lochplatte oder ein Sieb 16 mit einer Vielzahl von Öffnungen 26 angeordnet. In Strömungsrichtung vor der Lochplatte oder dem Sieb 16 befindet sich ein Verteilerraum 17, der über eine Anschlussöffnung 18 mit einer der Verteilerleitungen 6 oder 7 verbunden ist. Im Verteilerraum 17 kann vor der Lochplatte oder dem Sieb 16 ein nicht dargestelltes Druckverteilersieb eingebaut sein, um den Druck möglichst gleichmäßig auf die gesamte Lochplatte bzw. das Sieb 16 zu verteilen.

Die Schmelze, z.B. PET-Schmelze, wird mittels des erzeugten Drucks des Extruders oder der Schmelzepumpe 9 durch die Lochplatte oder das Sieb 16 gedrückt. Wenn die Schmelze durch die Lochplatte oder das Sieb 16 gepresst wird, fallen die dünnen Schmelzefäden frei und ohne Kontakt zur Wand der in den Rohren 13 gebildeten Kammer 25 durch die Schwerkraft nach unten. Die Lochplatte oder das Sieb 16 umfasst je nach Durchsatz eine unterschiedliche Anzahl an kleinen Öffnungen. Bei einem Lochdurchmesser von etwa 300 µm und einem Massedurchsatz von rund 70kg/h sind beispielsweise ca. 2000 Löcher notwendig, um gute Ergebnisse erzielen zu können.

Durch die Länge des Behälters 5 und insbesondere des Sammelbehälters 19 kann die Verweildauer der Schmelze in der Kammer 25 beeinflusst werden, wobei auch der Durchmesser der dünnen Schmelzefäden, welche sich durch die Schwerkraft noch weiter verdünnen, und somit deren Gewicht die Verweildauer beeinflusst, ebenso wie die Temperatur, welche die Viskosität der Schmelze beeinflusst. Je höher die Temperatur ist, um so schneller erfolgt in der Regel die Polykondensation. Bei PET liegt die ideale Temperatur im Sammelbehälter 19 beispielsweise bei bevorzugt zwischen 270° und 300°C. Durch die parallele Anordnung von Behältern 5 kann der Durchsatz der erfindungsgemäßen Vorrichtung verändert werden. Die Qualität der Polykondensation und auch Reinigung der Schmelze kann beispielsweise auch durch zwei oder mehr hintereinander geschaltete Behälter 5 verbessert werden.

Durch die hohe Anzahl an kleinen Löchern erreicht man ein sehr hohes Oberflächen- zu Volumen-Verhältnis der Schmelze. Durch die Schwerkraft dünnen die Schmelzefäden je nach Höhe des Behälters 5 noch weiter aus, wodurch sich das Oberflächen- zu Volumen-Verhältnis nochmals maßgeblich erhöht. In einem perfekten Zusammenspiel mit der großen Schmelzeoberfläche, der Verweilzeit, der hohen Temperatur sowie des Vakuums gelingt nicht nur eine hervorragende Reinigung der Schmelze sondern auch eine Polykondensationsreaktion der Schmelze. Durch das Einwirken von Temperatur und Vakuum ziehen sich die Fäden im Schmelzezustand einzeln bis zum Sammelbehälter 19 des Behälters 5 nach unten.

Durch das hohe Oberflächen- zu Volumen-Verhältnis der Schmelze, des hohen Vakuums und der hohen Temperatur im Reaktor können z.B. Wassermoleküle, andere Reaktionsprodukte oder flüchtige Stoffe binnen kurzer Zeit an die Oberfläche der Schmelzefäden diffundieren. Im gasförmigen Zustand können diese Stoffe durch das angelegte Vakuum am Reaktor rasch entfernt werden.

Bei der dabei stattfindenden Polykondensations-Reaktion verlängern sich unter Abspaltung von Reaktionsprodukten die Molekülketten, was zu einer Erhöhung der Grenzviskosität führt.

Da die Fallzeit der Schmelzefäden in der Kammer 25 für eine ausreichend hohe Polykondensation möglicherweise nicht ausreichend ist, werden die Fäden im Sammelbehälter 19, der sich im Fußteil 15 befindet, wieder zu einem Schmelzbad zusammengeführt. Im Schmelzebad befindet sich ein von einem Motor 28 angetriebenes schneckenförmiges, Misch- und Austragselement, z.B. ein Austragsextruder 27, welcher vorzugsweise so ausgelegt ist, dass neben der Förderwirkung und dem Druckaufbau für die Weiterverarbeitung eine gute Mischwirkung durch eine mehrmalige Oberflächenerneuerung der Schmelze stattfinden kann. Anstelle eines Austragsextruders kann auch eine Austragschnecke oder dergleichen vorgesehen sein. Da die Schmelze ständig in Bewegung ist, wird ein thermischer Abbau der Schmelze auf ein Minimum reduziert.

Vom Austragsextruder 27 wird die Schmelze zur Sammelleitung 10 gepumpt. Mit einer anschließenden Stranggranulierung 12 kann die Schmelze zu hochqualitativen Granulat verarbeitet werden. Mittels eines Folgewerkzeuges nach dem Austragsextruder 27 kann auch ohne weiteres gleich Produkte wie Umreifungsbänder, Fasern, Folien usw. aus Recycling-PET erzeugt werden. Eine solche Anwendung würde den großen Vorteil mit sich bringen, dass das Recycling-PET ohne Vortrocknung und ohne SSP (solid state Polymerisation) durch einmaliges Aufschmelzen direkt zu hochwertigen Produkten verarbeitet werden kann.

Der Kopfteil 14 und der Fußteil 15 sind mit dem Rohr 13 verbunden, z.B. verschraubt. Am Rohr 13 befinden sich des Weiteren Anschlüsse 22 zu einer nicht dargestellten Vakuumpumpe sowie allenfalls noch Montage- oder Serviceöffnungen 23 und/oder Schaugläser 24.

An Stelle einer Vakuumpumpe können an die Anschlüsse auch Leitungen zum kontinuierlichen oder intermittierenden Zu- und Abführen von gegebenenfalls inertem, getrocknetem Gas angeschlossen werden, um die abgetrennten Verunreinigungen abzuführen.

In Versuchen wurde festgestellt, dass Polykondensation bei PET bei einem Unterdruck von 0,5 bis 5 mbar und einer Temperatur von vorzugsweise 270° bis 300°C am raschesten vor sich geht. In jedem Fall sollte der Unterdruck kleiner 20 mbar sein. Da der Unterdruck die Grenzviskosität der erzeugten PET Schmelze sehr stark beeinflusst, kann über eine nach dem Austragsextruder 27 angeordnete Einrichtung 11 zur In-Line Viskositätsmessung sehr einfach und rasch eine Regelung der Grenzviskosität durch Verändern des Unterdruckes hergestellt werden.

Durch die besondere Gestaltung des Fußteils 15 kann die Verweilzeit der Schmelze unter Vakuum über den Füllstand im Sammelbehälter 19 beeinflusst werden. Längere Verweilzeiten bewirken ein größeres Polymerkettenwachstum und somit eine weitere Erhöhung der Grenzviskosität.

Der Füllstand des Schmelzbades im Sammelbehälter 19 wird durch einen geeigneten Sensor, welcher wiederum den Austragsextruder 27 steuert, geregelt. Die an den dünnen Schmelzefäden durch Hochvakuum und Temperatur begonnene Polykondensation wird in der Folge im Schmelzebad durch Verweilen und in Bewegung halten der Schmelze durch das Misch-und Austragsteil 27 fortgesetzt. Die Höhe des Schmelzebades kann je nach Anforderung so groß sein, dass der Austragsextruder 27 vollständig oder nur zum Teil von Schmelze bedeckt ist. Es ist jedoch vorteilhaft, wenn das schneckenförmige Misch- und Austragselement 27 nicht vollständig mit Schmelze bedeckt ist, wenn durch die Drehbewegung des Austragselements die Schmelze immer wieder aufgerissen und die Oberfläche erneuert werden soll.

Über die nach dem Austragsextruder 27 befindliche Einrichtung zur In-Line Viskositätsmessung 11 kann wie oben beschrieben über den entsprechenden Füllstand im Sammelbehälter 19 und die daraus resultierende Verweilzeit die gewünschte Grenzviskosität eingestellt bzw. geregelt werden.

Versuche haben gezeigt, dass die Kombination von Schmelzefäden und Schmelzebad eine äußerst effiziente Polykondensation bewirkt und somit schon bei vergleichsweise sehr kurzen Verweilzeiten substantielle Erhöhungen der Grenzviskosität möglich sind.

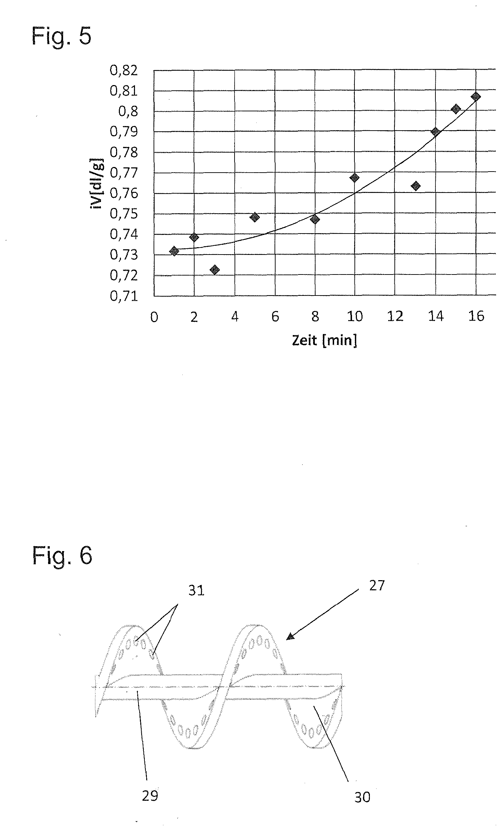

In Fig. 5 ist der Einfluss der Verweilzeit im Behälter 5 auf den iV-Wert dargestellt. Bei geringeren oder höheren iV-Ausgangswerten ist eine vergleichbare Verbesserung gegeben. Es ist zu erkennen, dass ab einer Verweilzeit von ca. 1 Minute bereits eine Erhöhung der Grenzviskosität eintritt. Substantielle Verbesserungen werden bereits nach wenigen Minuten, insbesondere ab drei oder vier Minuten, erreicht. Je nach gewünschtem Ergebnis bzw. Verbesserung der iV sind Verweilzeiten von sechs, acht, zehn oder mehr Minuten bis hin zu 12, vierzehn oder 16 Minuten denkbar bzw. vorteilhaft. Im Vergleich dazu arbeiten bekannte Schmelzereaktoren mit Verweilzeiten von 30 min bis mehreren Stunden um ähnliche Ergebnisse zu erzielen.

Durch besondere Ausgestaltung des schneckenförmigen Misch- und Austragsteiles 27 im Sammelbehälter 19 kann der Reaktionsprozess noch weiter optimiert werden.

So führt ein geringer Kerndurchmesser der Welle 29 in Bezug auf den Gesamtdurchmesser sowie ein speziell ausgeführter Schneckengang, beispielsweise wie in Fig. 6 gezeigt mit Löchern oder Ausnehmungen 31 an den Stegen 30 im Bereich der Kammer 19, zu einer erhöhten Oberfläche und somit Oberflächenerneuerung der PET-Schmelze. Dadurch wird der Diffusionsvorgang für den Abtransport der Abspaltprodukte (z.B. Wasser) wesentlich erleichtert und somit der Polymerisationsvorgang beschleunigt.

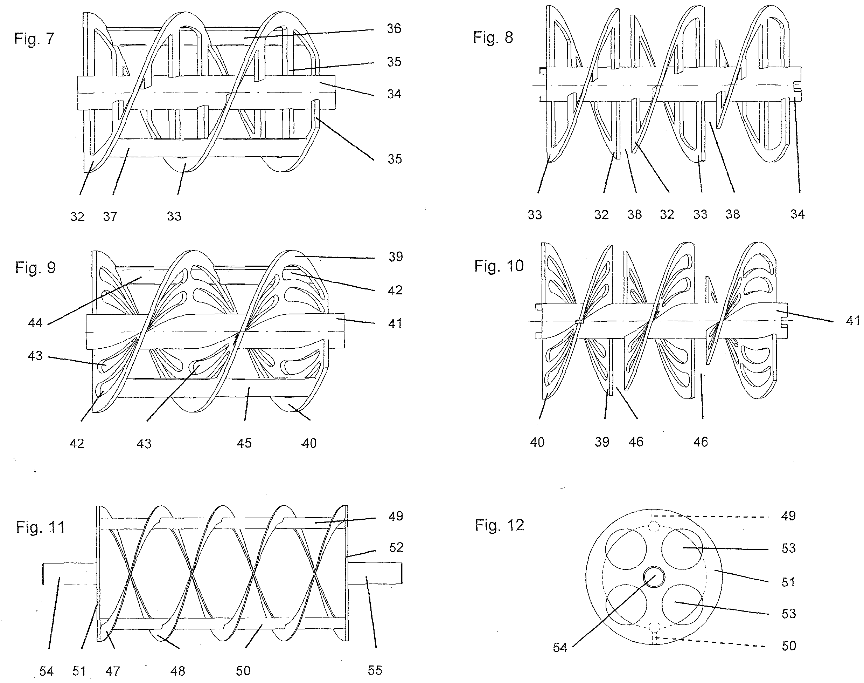

In den Fig. 7 bis 12 sind weitere bevorzugte Ausführungsformen von Wellen dargestellt.

Bei den Ausführungsformen von Fig. 7 und 8 winden sich Stege 32, 33 in Form einer Doppelhelix um den Kern 34 der Welle und werden mittels Speichen 35 im Abstand davon gehalten. Mittels zusätzlicher, achsparallel verlaufender Stege 36, 37 wird nicht nur die Welle insgesamt versteift sondern auch zusätzlich die Durchmischung der Schmelze verbessert und die Oberfläche erhöht. Während die in Fig. 7 dargestellte Welle durchgängige Stege 32, 33 aufweist, sind die Stege 32, 33 bei der Ausführungsform von Fig. 8 unterbrochen (in der dargestellten Ausführungsform zwei mal). In die dadurch entstehenden, vorzugsweise im Wesentlichen radial ausgerichteten, Schlitze 38 können von außen, beispielsweise von einem Schneckenrohr, nicht dargestellte Stifte oder dergleichen ragen, welche die Durchmischung der Schmelze weiter verbessern.

Die Ausführungsformen der Fig. 9 und 10 sind ähnlich wie jene der Fig. 7 und 8 aufgebaut, jedoch gehen die in Form einer Doppelhelix um den Kern 41 der Welle gewundenen Stege 39, 40 bis zum Kern 41 der Welle und weisen teilkreisförmige Durchbrechungen 42, 43 auf. Anstelle von achsparallel verlaufenden Stegen 44, 45 der Ausführungsform von Fig. 9 sind bei der Ausführungsform von Fig. 10 wiederum Schlitze 46 für von außen zwischen die unterbrochenen Stege 39, 40 ragende Stifte oder dergleichen auf.

In den Fig. 11 und 12 ist eine kernlose Welle dargestellt, bei der wiederum Stege 47, 48 in Form einer Doppelhelix angeordnet sind, die mittels achsparalleler Stege 49, 50 untereinander und mit stirnseitigen Scheiben 51, 52 verbunden sind. In den Scheiben 51, 52 sind Durchbrechungen 53 für den Durchtritt der Schmelze angeordnet sowie Achszapfen 54, 55 angebracht, mit denen die Welle gelagert bzw. Mit anschließenden Wellen verbunden werden kann.

Das schneckenförmige Misch- und Austragsteil 27 im Sammelbehälter 19 gemäß der Ausführungsform von Fig. 3 und 4 kann ausschließlich wie die jeweils in den Fig. 6 bis 12 dargestellten Ausführungsformen von Wellen ausgeführt sein, aber auch beliebige Kombinationen dieser aufweisen. Beispielsweise können die Ausführungsformen der Fig. 7 und 9 jeweils am Beginn und am Ende des schneckenförmigen Misch- und Austragsteils 27 als Einzugs- und Förderelemente verwendet werden, wogegen die Ausführungsformen der Fig. 8 und 10 im Mittelteil des schneckenförmigen Misch- und Austragsteils 27 als Mischsegmente verwendet werden.

Durch die Erfindung können einzelne oder alle der folgenden Vorteile erzielt werden:
- Wiederaufbereiten von verschiedensten Eingangsmaterialien (Fasern, Folien, Flaschenmahlgut, Umreifungsbänder, Anfahrkuchen usw.) ;
- Neben Granulat kann durch das Verwenden formgebender Werkzeuge auch direkt ein qualitativ hochwertiges Kunststoffprodukt hergestellt werden;
- Einstellbare Grenzviskosität für z.B. Polyester;
- Grenzviskosität und Reinheit des Ausgangsproduktes kann höher sein als jene des Eingangsproduktes ("Upcycling");
- Kein Kristallisieren und Vortrocknen von Polyester-Eingangsmaterial erforderlich;
- Keine Nachbehandlung von Polyestermaterial durch SSP notwendig;
- Relativ niedrige Anlagenkosten;
- Sehr kurze Behandlungszeit für das Material;
- Hohe Energieeffizient des Gesamtprozesses bezogen auf Ausgangsmaterial-Qualität gegenüber bekannten Prozessen, da nur eine einmalige Aufheizung erforderlich ist;
- Vorhandene Recyclinganlagen können ohne große Veränderungen weiter verwendet und mit der erfindungsgemäßen Vorrichtung nachgerüstet werden.

## Patentansprüche

1. Verfahren zum Erhöhen der Grenzviskosität einer Polykondensatschmelze unter Unterdruck,
- bei dem die Schmelze durch eine Lochplatte oder ein Sieb (16) mit mehreren Öffnungen (26) mit einem Durchmesser kleiner 0,5 mm in eine Kammer (25) eintritt, in der ein Druck kleiner 20 mbar herrscht,
- bei dem die Schmelze diese Kammer (25) in dünnen Fäden im freien Fall passiert und
- bei dem die dünnen Fäden in einem Sammelbehälter (19) unterhalb der Kammer (25) zu einem Schmelzebad zusammengeführt werden und die Schmelze im Sammelbehälter (19) verweilt,
**dadurch gekennzeichnet,**
- **dass** die Schmelze im Sammelbehälter (19) für wenigstens eine Minute verweilt und dabei die Schmelze im Sammelbehälter (19) von einem in horizontaler Lage ausgerichteten, vorzugsweise schneckenförmigen Austragsextruder (27) unter Vakuum ständig bewegt wird,
- **dass** eine Höhe des Schmelzebades im Sammelbehälter (19) so groß gewählt wird, dass der Austragsextruder (27) im Sammelbehälter (19) nicht vollständig von der Schmelze bedeckt wird, und dabei die Schmelze durch eine Drehbewegung des Austragsextruders (27) immer wieder aufgerissen und die Oberfläche erneuert wird,
- **dass** die bei den dünnen Fäden begonnene Polykondensation im Schmelzebad durch das Verweilen und in Bewegung halten fortgesetzt wird, und so ein Polymerkettenwachstum und damit eine weitere Erhöhung der Grenzviskosität bewirkt wird, und
- **dass** die Schmelze vom Austragsextruder (27) aus dem Sammelbehälter (19) ausgetragen wird.

2. Verfahren nach Anspruch 1, **dadurch gekennzeichnet, dass** in der Kammer (25) ein Druck kleiner 10 mbar, besonders bevorzugt zwischen 0,5 mbar und 5 mbar, herrscht.

3. Verfahren nach Anspruch 1, **dadurch gekennzeichnet, dass** sich in der Kammer (25) ein getrocknetes Gas befindet.

4. Verfahren nach einem der Ansprüche 1 bis 3, **dadurch gekennzeichnet, dass** die Schmelze durch Öffnungen (26) mit einem Durchmesser zwischen 0,05 und 0,5 mm, insbesondere bevorzugt zwischen 0,1 und 0,3 mm, in die Kammer (25) eintritt.

5. Verfahren nach einem der Ansprüche 1 bis 4, **dadurch gekennzeichnet, dass** die Verweilzeit der Schmelze im Sammelbehälter (19) wenigstens 1 bis 2 Minuten, vorzugsweise wenigstens 4 Minuten, beträgt.

6. Verfahren nach Anspruch 5, **dadurch gekennzeichnet, dass** die Verweilzeit der Schmelze im Sammelbehälter (19) bis hin zu zwölf, vierzehn oder sechzehn Minuten beträgt.

7. Verfahren nach einem der Ansprüche 1 bis 6, **dadurch gekennzeichnet, dass** nach dem Austragsextruder (27) eine In-Line Viskositätsmessung der Schmelze durchgeführt wird und durch Verändern des Unterdrucks eine Regelung der Grenzviskosität der Schmelze hergestellt wird.

8. Verfahren nach einem der Ansprüche 1 bis 7, **dadurch gekennzeichnet, dass** die Schmelze nacheinander wenigstens zwei Kammern (25) passiert.

9. Verfahren nach Anspruch 8, **dadurch gekennzeichnet, dass** die Schmelze zwischen zwei Kammern (25) durch eine Temperiereinrichtung auf der erforderlichen Schmelzetemperatur gehalten wird.

## Claims

1. A method for increasing the intrinsic viscosity of a polycondensate melt under negative pressure,
- in which the melt enters a chamber (25) through a perforated plate or a screen (16) with a plurality of openings (26) with a diameter of less than 0.5 mm, in which chamber (25) there is a pressure of less than 20 mbar,
- in which the melt passes through said chamber (25) in free fall in the form of thin threads, and
- in which the thin threads are brought together in a reservoir (19) below the chamber (25) to form a melt bath and the melt dwells in the reservoir (19),
**characterized in**
- **that** the melt dwells in the reservoir (19) for at least one minute, and in the course of this the melt in the reservoir (19) is continuously moved under vacuum by a discharge extruder (27) which is aligned in a horizontal position and is preferably screw-shaped,
- **that** a height of the melt bath in the reservoir (19) is selected to be so large that the discharge extruder (27) in the reservoir (19) is not completely covered by the melt, and, in this regard, the melt is repeatedly torn open by a rotational movement of the discharge extruder (27) and the surface is renewed,
- **that** the polycondensation which has begun in the thin threads is continued in the melt bath by the dwelling and keeping in motion, and thus a polymer chain growth and thus a further increase in the intrinsic viscosity is effected, and
- **that** the melt is discharged from the reservoir (19) by the discharge extruder (27).

2. The method according to claim 1, **characterized in that** the chamber (25) is under a negative pressure of below 10 mbar, particularly preferred between 0.5 mbar and 5 mbar.

3. The method according to claim 1, **characterized in that** there is a dried gas in the chamber (25).

4. The method according to one of claims 1 to 3, **characterized in that** the melt enters the chamber (25) through openings (26) with a diameter of between 0.05 and 0.5 mm, particularly preferred between 0.1 and 0.3 mm.

5. The method according to one of claims 1 to 4, **characterized in that** the dwelling time of the melt in the reservoir (19) is at least 1 to 2 minutes, preferably at least 4 minutes.

6. The method according to claim 5, **characterized in that** the dwelling time of the melt in the reservoir (19) is up to twelve, fourteen or sixteen minutes.

7. The method according to one of claims 1 to 6, **characterized in that** after the discharge extruder (27), an in-line viscosity measurement of the melt is performed and a control of the intrinsic viscosity of the melt is established by changing the negative pressure.

8. The method according to one of claims 1 to 7, **characterized in that** the melt passes through at least two chambers (25) consecutively.

9. The method according to claim 8, **characterized in that** the melt between two chambers (25) is kept at the required melt temperature by a temperature control device.

## Revendications

1. Procédé permettant d'augmenter la viscosité limite d'une fonte de polycondensat sous pression négative,
- dans lequel la fonte entre par une plaque perforée ou un tamis (16) avec plusieurs ouvertures (26) d'un diamètre inférieur à 0,5 mm, dans une chambre (25) dans laquelle règne une pression inférieure à 20 mbar,
- dans lequel la fonte traverse cette chambre (25) sous la forme de fils minces en chute libre et
- dans lequel les fils minces sont regroupés dans un récipient collecteur (19) en dessous de la chambre (25) en un bain de fonte et la fonte reste dans le récipient collecteur (19),
**caractérisé en ce que**
- la fonte reste dans le récipient collecteur (19) pendant au moins une minute et la fonte dans le récipient collecteur (19) est alors déplacée de manière permanente sous vide par une extrudeuse de sortie (27) orientée dans la position horizontale, de préférence en forme de vis sans fin,
- une hauteur du bain de fonte dans le récipient collecteur (19) est telle que l'extrudeuse de sortie (27) n'est pas entièrement recouverte par la fonte dans le récipient collecteur (19) et la fonte est constamment rompue et sa surface est constamment renouvelée par un mouvement de rotation de l'extrudeuse de sortie (27),
- la polycondensation, commencée par les fils minces dans le bain de fonte, est continuée par le séjour et par le maintien en mouvement et une croissance des chaînes polymères et donc une augmentation de la viscosité limite est ainsi obtenue et
- la fonte est évacuée par l'extrudeuse de sortie (27) hors du récipient collecteur (19).

2. Procédé selon la revendication 1, **caractérisé en ce que**, dans la chambre (25), règne une pression inférieure à 10 mbar, de préférence entre 0,5 mbar et 5 mbar.

3. Procédé selon la revendication 1, **caractérisé en ce que**, dans la chambre (25), se trouve un gaz sec.

4. Procédé selon l'une des revendications 1 à 3, **caractérisé en ce que** la fonte entre dans la chambre (25) par des ouvertures (26) d'un diamètre entre 0,05 et 0,5 mm, de préférence entre 0,1 et 0,3 mm.

5. Procédé selon l'une des revendications 1 à 4, **caractérisé en ce que** le temps de séjour de la fonte dans le récipient collecteur (19) est d'au moins 1 à 2 minutes, de préférence d'au moins 4 minutes.

6. Procédé selon la revendication 5, **caractérisé en ce que** le temps de séjour de la fonte dans le récipient collecteur (19) peut aller jusqu'à douze, quatorze ou seize minutes.

7. Procédé selon l'une des revendications 1 à 6, **caractérisé en ce que**, après l'extrudeuse de sortie (27), est effectuée une mesure en ligne de la viscosité de la fonte et une régulation de la viscosité limite de la fonte est réalisée en modifiant la pression négative.

8. Procédé selon l'une des revendications 1 à 7, **caractérisé en ce que** la fonte traverse successivement au moins deux chambres (25).

9. Procédé selon la revendication 8, **caractérisé en ce que** la fonte est maintenue, entre deux chambres (25), à l'aide d'un dispositif de régulation de température, à la température de fusion nécessaire.
